# EUROPEAN PATENT SPECIFICATION

(11) **EP 1 836 239 B1**
(45) Date of publication and mention of the grant of the patent: **29.10.2008**
(21) Application number: 05850369.9
(22) Date of filing: 28.12.2005
(51) Int. Cl.: C08J 5/00, C08K 9/06, C09C 1/44

(54) **COMPOSITE MATERIALS CONTAINING CARBON NANOPARTICLES**
KOHLENSTOFFNANOPARTIKEL ENTHALTENDE VERBUNDWERKSTOFFE
MATERIAUX COMPOSITES CONTENANT DES NANOPARTICULES DE CARBONE

(30) Priority: 13.01.2005 US 643842 P
(43) Date of publication of application: 26.09.2007
(73) Proprietor: CINVENTION AG, 65203 Wiesbaden (DE)
(72) Inventor: ASGARI, Sohéil, 65193 Wiesbaden (DE)
(74) Representative: Maiwald Patentanwalts GmbH
(86) International application number: PCT/EP2005/014096
(87) International publication number: WO 2006/074809

(56) References cited:
- EP-A- 1 439 248
- WO-A-02/088025
- US-B1- 6 187 823

## Description

The present invention relates to a process of producing composite materials by a sol/gel-process, comprising carbon nanoparticles and organic polymer material. The invention further relates to composite materials, which are manufactured with the use of said sol/gel technology.

Composite materials, in particular ceramics, are used as constructive materials for functionalized components of machines, devices or components and the like, which are exposed to high thermal and mechanical strains due to their mechanical properties and their thermal or chemical stability. In particular, porous ceramics are used more and more in membranes, filters, catalysts or sensors due to their advantageous properties.

Furthermore, there is a need for functionalized composite materials, which exhibit certain electrical, di-electrical, magnetic or optic properties or even semi-conducting, ferromagnetic or super-conducting properties.

US 6,255,241 discloses a method of producing fullerene dispersed ceramics, wherein a so-called micelle formation-method is used, which forms C₆₀ micelles to enable uniform distribution of the carbon-based particles within the resulting material. This prior art method further requires drying of the sol or gel as well as a subsequent heat-treatment to obtain the ceramic material.

US 6,066,272 discloses optical glasses and polymers that incorporate homogeneously dispersed fullerene molecules via the sol/gel-process, resulting in materials having an application as optical filters.

EP 1 439 248 A discloses a method of producing a carbon nanotube dispersion liquid, in which a carbon nanotube modified with a basic or acidic functional group is dispersed in a polar solvent. A composite is prepared by mixing a polymer solution and the carbon nanotube dispersion liquid and volatilizing the solvent.

WO 02/088025 A discloses a method of making a mixture of carbon nanotubes (pristine or functionalized) and polymers, comprising the steps of i) dispersing or dissolving the carbon nanotubes and the electron donor compound in a solvent or dispersant; ii) adding the solvent or dispersant to a polymer and blending the solvent or dispersant with the polymer, and iii) removing the solvent or dispersant from the mixture.

Disadvantages of common ceramics are the brittleness of the material as one of the problems in connection with their forming process into stable two or three-dimensional structures. In addition, different thermal extension coefficients of the (different) raw materials might lead to stress within the formed materials if components of the ceramic materials are e.g. applied together with metallic components.

If sintering processes are applied to form ceramic materials, the size and distribution of pores cannot be controlled and might lead in case of metallic substrates under typical thermal conditions to an embrittlement of the substrate and thus adversely affect the properties of the material.

Furthermore, these materials are formed by thermal treatment under high pressure and/or high temperature conditions by sintering green bodies. These processes are costly and also require an additional high after-processing effort.

One object of the present invention is to provide a process for the production of composite materials, which allow for the "tailoring" of the properties of the composite materials, e.g. resistance to mechanical stress, electrical conductivity, impact strength or optical properties.

Another object of the present invention is to provide new composite materials, wherein the porosity of the formed material can be varied for use in several fields of application without adversely affecting the physical and chemical stability.

A further object of the present invention is to provide a method for the production of composite materials, in which the conversion of the sol/gel into the composite material allows an almost error-free sintering process to achieve extremely stable materials.

### Summary of the invention

The solution according to the invention is a process for producing materials, the process comprising:
a) forming a sol/gel by reacting at least one sol/gel forming component with at least one carbon nonoparticle which was chemically modified by functionalization with suitable linker groups which are capable to react with the sol/gel forming component, wherein the carbon-based nono-particle with the sol/gel is covalently connected with said at least one sol/gel forming component
b) optionally adding organic polymer material to the formed sol/gel,
c) converting the resulting mixture into a solid composite material.

### Brief description of the figures

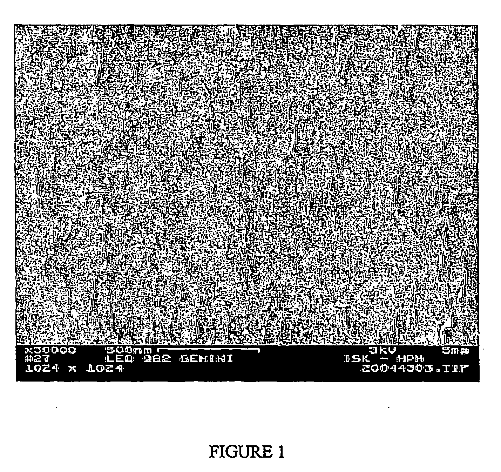

Fig. 1 is an SEM picture (magnification x50,000) illustrating the surface of the gel produced according to Example 2 before oxidative pyrolysis, showing a nearly perfect distribution of the fullerene particles in the solid gel network.
Fig. 2 is an SEM picture (magnification x50,000) of the same material as in figure 1 after oxidative pyrolysis, showing a uniform porosity of about 1 nm average pore size.

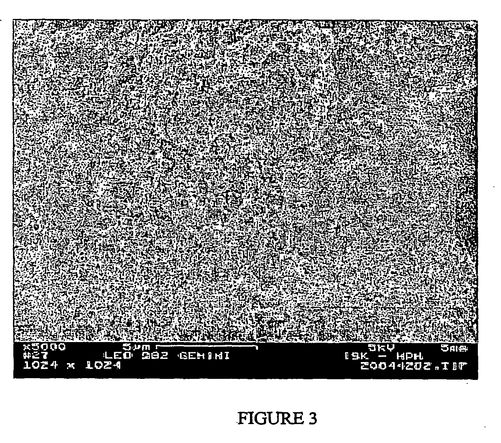

Fig. 3 is an SEM picture (magnification x5,000) illustrating the fracture edge surface of the cylindrical composite material body produced according to Example 5.

### Detailed description of the invention

The sol/gel-process is widely applied to build up different types of networks. The linkage of the components under formation of the sol or gel can take place in several ways, e.g. via hydrolytic or non-hydrolytic sol/gel processing as known in the prior art in principle.

The term "sol/gel" as used within this specification means either a sol or a gel. The sol can be converted into a gel e.g. by ageing, curing, raising of pH, evaporation of solvent or any other methods known in the art.

The inventive composite materials comprising carbon-based nanoparticles e.g. exhibit the advantageous property that they can be processed without almost any mass- and/or volume-shrinking at low temperatures from sols and/or gels.

Especially sols prepared in the process of the present invention are also suitable for coating of almost any type of substrate with porous or non-porous film coatings. According to the process of the invention, thin or thick coatings as well as shaped bulk composite materials with unique properties can be obtained.

### Carbon nanoparticles

In preferred embodiments the carbon nanoparticles are fullerene molecules, in particular C₃₆ - C₆₀ -, C₇₀ -, C₇₆-, C₈₀-, C₈₆-, C₁₁₂-fullerenes or any mixtures thereof; also suitable within the scope of the present invention is the use of nano-tubes, in particular MWNT, SWNT, DWNT; random-oriented nano-tubes, as well as fullerene onions or metallo-fullerenes, carbon fibres, soot particles or graphite particles; and any combinations thereof and combinations thereof with fullerenes.

The carbon nanoparticles are chemically modified by functionalization with suitable linker groups which are capable to react with the sol/gel forming component, preferably to comprise polar or nonpolar groups which can be further reacted and incorporated into the sol or gel network in any conventional sol/gel process technology. Suitable polar and nonpolar groups as linker groups are selected from the group consisting of inorganic or organic primary, secondary or tertiary, straight chain or branched, substituted or unsubstituted C₁ - C₂₀ - alkyl-, C₂ - C₂₀ - alkenyl-, C₂ - C₂₀ - alkynyl-, cycloalkyl-, cycloalkenyl-, cycloalkynyl-, C₁ - C₂₀ - aryl-, alkylaryl-, arylalkyl-, alkenylaryl-, arylalkenyl-, alkynylaryl-, arylalkynyl-groups; alkyl-metal alkoxides, halogens, aromatic or aliphatic alcohol groups, pyrrolidinegroups, phthalocyaninegroups, carboxyl, carboxylate, esters, ethers, organofunctional silanes, aminofunctional silanes and the like.

Modifications of the carbon-based nanoparticle can be achieved by nucleophilic addition-, cycloaddition-, alkylation-, halogenation-, carboxylation-reagents as well as by covalent coupling with polar groups, such as pyrrolidine, amino-, phathalocyanine-groups or other suitable functional groups allowing incorporation of the modified nanoparticles into the sol/gel network.

Further specific modification methods for carbon nanoparticles are disclosed in US 6,203,814 B1, and these may also be applied in the process of the present invention.

Preferred reagents for chemically modifying the nanoparticles are, for example, 3-aminopropyltrimethoxysilane, 3-aminopropyl-triethoxysilane, 2-aminoethyl-3-aminopropyltrimethoxysilane, triaminofunctional propyltrimethoxysilane (Dynasilan^{®} TRIAMO), N-(n-butyl)-3-aminopropyltrimethoxysilane, 3-aminopropylmethyldiethoxysilane, 3-glycidyloxypropyltrimethoxysilane, 3-glycidyloxypropyltriethoxysilane, vinyltrimethoxysilane, vinyltriethoxysilane, 3-mercaptopropyltrimethoxysilane, 6-amino-1-hexanol, 2-(2-aminoethoxy)ethanol, cyclohexylamine, butyric acid cholesterylester (PCBCR), 1-(3-methoxycarbonyl)propyl)-1-phenylester or combinations thereof.

Sometimes it may be preferred to oxidize the carbon nanoparticles before functionalizing them, e.g., by treatment with oxidizing agents like nitric acid, molecular oxygen, etc.

In some preferred embodiments mixtures of said nanoparticles with different specifications/modifications are applied to affect the properties required of the material according to the invention.

It may be particularly preferred to modify carbon nano-particles covalently, for example, under reducing conditions. Particularly preferred is the alkylation and/or hydrogenation of carbon-nano-tubes and nano-tube-like species using various wet chemical metal reduction reactions, for example, treatment with carbanion complexes of alkaline metals in the presence of alkyl halides and methanol, for the production of alkylated and/or hydrogenated carbon species, or by oxidative functionalization with the use of acids. For example, an oxidation step resulting in a carboxylation of the carbon nano-particles and/or nano-tubes, a modification is achieved, which allows for a subsequent condensation reaction with alkyl amines or a direct poly-condensation with amines and the like, or any esterification reaction with suitable reactants.

Further possibilities provided without intention to construe any limitation are, for example, addition reactions with nitrenes, carbenes or radicals in accordance with known methods, reductive electro-chemical coupling with aryl diazonium salts, a 1,3-dipolar cyclo-addition of azomethine ylidene, for example, by decarboxylization of immonium salts.

It may also be preferred to modify carbon nano-particles, particularly nano-tubes and similar nano-morphous species non-covalently, for example, by coating the particles with surfactants, non-ionic or ionic polymers, for example polyethylene glycol (PEG), or by adsorption of polymerizable monomers, DANN, proteins, glucoseamines, cylodextrine and similar suitable substances.

In preferred embodiments, the chemical modification of the carbon-nanoparticles is performed as a separate step, before combining the modified particles with sol/gel forming components.

Alternatively, chemical modification of the carbon nanoparticles may be done in situ, while forming the sol/gel. In this option, any of the sol/gel forming agents mentioned below may also act, at least in part, as a modification reagent to covalently modify the carbon nanoparticles.

Preferably, however, the reagents used for modifying the nanoparticles are different from the sol/gel components.
The (average) size of carbon nanoparticles (before chemical modification) used is in the range from 0,5 nm to 500 nm, preferred from 0,5 nm to 100 nm, more preferred from 0,7 nm to 50 nm. The size, as used within the specification, can be either the diameter or the length of the particle. The size of the particles is provided as an average particle size, preferably determined by laser methods like the TOT-method (Time-Of Transition) e.g. on a CIS Particle Analyzer of Ankersmid. Further suitable methods are powder diffraction or TEM (Transmission-Electron-Microscopy).

In preferred embodiments the carbon nanoparticles can be incorporated into polymers for example like core/shell or core/sheath particles, in which the shell or sheath phase completely or incompletely encapsulates the core, i.e. the carbon-based nanoparticle. In case the polymer cannot be incorporated into the sol/gel network itself, it has to be suitably modified with functional groups allowing direct incorporation into the sol/gel network. The polymers comprising the carbon-based nanoparticles are preferably covalently incorporated into the sol/gel network and are further processed to materials according to the invention.

The encapsulation of the carbon-based nanoparticles into the polymers can be achieved by various polymerization techniques known in the art, e.g. dispersion, suspension or emulsion polymerization. Preferred polymers are PMMA, polystyrol or other latex-forming polymers, polyvinyl acetate or particularly preferred conducting polymers. These polymer capsules, which contain the carbon-based nanoparticles, can further be modified, for example by linking lattices and/or further encapsulations with polymers, preferred with elastomers or they can be coated by metal oxides, metal salts or other suitable metal compounds, e.g. metal alkoxides. The application of encapsulated carbon-based nanoparticles can prevent aggregation and the precursor material can be processed without agglomerating and/or affecting the composite material.

Techniques to modify the polymers, if necessary, are well known to those skilled in the art, and may be employed depending on the requirements of the individual composition to be used in the inventive process

By chemically modifying the carbon-based nanoparticle the solids content of the resulting sol/gel composite can be varied significantly. The person skilled in the art will select suitable chemical modifications to optimize the solubility, dispersibility or the degree of suspensibility or emulsifyability. The solids content of the carbon nanoparticles in the inventive composite material is in the range from 0.1 % to 90 %, preferably from 1% 90 % and more preferably from 5 % to 90 %, even more preferred from 20 % to 70 % (all percentages are in weight percent referring to the total weight of the composite material produced in the inventive process).

### Sol/gel forming components

The sol/gel forming components in the inventive process may be selected from alkoxides, oxides, acetates, nitrates of various metals, e.g. silicon, aluminum, bor, magnesium, zirconium, titanium, alkaline metals, alkaline earth metals, or transition metals, preferably from platinum, molybdenum, iridium, tantalum, bismuth, tungsten, vanadium, cobalt, hafnium, niobium, chromium, manganese, rhenium, iron, gold, silver, copper, ruthenium, rhodium, palladium, osmium, lanthanum and lanthanides, as well as combinations thereof.

In some preferred embodiments, the sol/gel forming components can be metal oxides, metal carbides, metal nitrides, metaloxynitrides, metalcarbonitrides, metaloxycarbides, metaloxynitrides, and metaloxycarbonitrides of the above mentioned metals, or any combinations thereof. These compounds, preferably as colloidal particles, can be reacted with oxygen containing compounds, e.g. alkoxides to form a sol/gel, or may be added as fillers if not in colloidal form.

In preferred embodiments of the present invention the at least one sol/gel forming component may be selected from alkoxides, metal alkoxides, colloidal particles, particularly metal oxides and the like. The metal alkoxides useful as sol/gel forming components in this invention are well-known chemical compounds that are used in a variety of applications. They have the general formula M(OR)ₓ wherein M is any metal from a metal alkoxide which e.g. will hydrolyze and polymerize in the presence of water. R is an alkyl radical of 1 to 20 carbon atoms, which may be straight chained or branched, and x has a value equivalent to the metal ion valence. Preferred in some embodiments of the present invention are such metal alkoxides as Si(OR)₄, Ti(OR)₄, Al(OR)₃, Zr(OR)₃ and Sn(OR)₄. Specifically, R can be the methyl, ethyl, propyl or butyl radical. Further examples of suitable metal alkoxides are Ti(isopropoxy)₄, Al(isopropoxy)₃, Al(sec-butoxy)₃, Zr(n-butoxy)₄ and Zr(n-propoxy)₄.

Particularly preferred are silicon alkoxides like tetraalkoxysilanes, wherein the alkoxy may be branched or straight chained and may contain 1 to 20 carbon atoms, e.g. tetramethoxysilane (TMOS), tetraethoxysilane (TEOS) or tetra-n-propoxysilane, as well as oligomeric forms thereof. Also suitable are alkylalkoxysilanes, wherein alkoxy is defined as above and alkyl may be a substituted or unsubstituted, branched or straight chain alkyl having 1 to 20 carbon atoms, e.g. methyltrimethoxysilane (MTMOS), methyltriethoxysilane, ethyltriethoxysilane, ethyltrimethoxysilane, methyltripropoxysilane, methyltributoxysilane, propyltrimethoxysilane, propyltriethoxysilane, isobutyltriethoxysilane, isobutyltrimethoxysilane, octyltriethoxysilane, octyltrimethoxysilane, commercially available from Degussa AG, Germany, methacryloxydecyltrimethoxysilane (MDTMS); aryltrialkoxysilanes like phenyltrimethoxysilane (PTMOS), phenyltriethoxysilane, commercially available from Degussa AG, Germany; phenyltripropoxysilane, and phenyltributoxysilane Phenyl-tri-(3-glycidyloxy)-silane-oxide (TGPSO), 3-aminopropyltrimethoxysilane, 3-aminopropyl-triethoxysilane, 2-aminoethyl-3-aminopropyltrimethoxysilane, triaminofunctional propyltrimethoxysilane (Dynasylan^{®} TRIAMO, available from Degussa AG, Germany), N-(n-butyl)-3-aminopropyltrimethoxysilane, 3-aminopropylmethyldiethoxysilane, 3-glycidyloxypropyltrimethoxysilane, 3-glycidyloxypropyltriethoxysilane, vinyltrimethoxysilane, vinyltriethoxysilane, 3-mercaptopropyltrimethoxysilane, Bisphenol-A-glycidylsilanes; (meth)acrylsilanes, phenylsilanes, oligomeric or polymeric silanes, epoxysilanes; fluoroalkylsilanes like fluoroalkyltrimethoxysilanes, fluoroalkyltriethoxysilanes with a partially or fully fluorinated, straight chain or branched fluoroalkyl residue of 1 to 20 carbon atoms, e.g. tridecafluoro-1,1,2,2-tetrahydrooctyltriethoxysilane and modified reactive flouroalkylsiloxanes available from Degussa AG under the trademarks Dynasylan^{®} F8800 and F8815; as well as any mixtures of the foregoing.

In another preferred embodiment sols/gels are prepared from carbon-based nano-particles and alkaline metal salts, e.g. acetates, as well as acids, like phosphorous acids, pentoxides, phosphates, or organo phosphorous compounds like alkyl phosphonic acids. Particularly preferred are calcium acetate, phosphorous acid, P₂O₅ as well as triethyl phosphite as a sol in ethanediol, whereby biodegradable composites can be prepared from carbon-based nanoparticles and physiologically acceptable inorganic components. By varying the stoichiometric Ca/P-ratio, the degeneration rate can be adjusted. The molar ratio of Ca, to P of 0,1 to 10 is preferred, 1 to 3 is particular preferred.

In some embodiments the sols/gels can be prepared from colloidal solutions, which comprise carbon-based nanoparticles, preferably in solution, dispersion or suspension in polar or nonpolar solvents, particular preferred in aqueous solvents as well as cationically or anionically polymerizable polymers as precursors, preferably alginate. By addition of suitable coagulators, e.g. inorganic or organic acids or bases, in particular acetates and diacetates, carbon containing composite materials can be produced by precipitation or gel formation. Optionally, further particles can be added to adjust the properties of the inventive material. These particles are e.g. metals, metal oxides, metal carbides, or mixtures thereof as well as metal acetates or-diacetates.

The sol/gel components used in the present invention may also be selected from colloidal metal oxides, preferably those colloidal metal oxides which are stable long enough to be able to combine them with the other sol/gel components and the chemically modified carbon nanoparticles. Such colloidal metal oxides included in this invention are SiO₂, Al₂O₃, ZrO₂, TiO₂, SnO₂, ZrSiO₄, B₂O₃, La₂O₃ and Sb₂O₅. Preferred for this invention are SiO₂, Al₂O₃, ZrO₂, TiO₂, SnO₂, ZrSiO₄ and ZrO(NO₃)₂. Most preferred are SiO₂, Al₂ O₃, ZrSiO₄ and ZrO₂. Further examples for the at least one sol/gel forming component are aluminiumhydroxide sols or -gels, aluminiumtri-sec-butylat, AlOOH-gels and the like.

Some of these colloidal sols are acidic in the sol form and, therefore, when used in conjunction with this invention during hydrolysis, additional acid need not be added to the hydrolysis medium. These colloidal sols can also be prepared by a variety of methods. For example, titania sols having a particle size in the range of 5 to 150 nm can be prepared by the acidic hydrolysis of titanium tetrachloride, by peptizing hydrous TiO₂ with tartaric acid and, by peptizing ammonia washed Ti(SO₄)₂ with hydrochloric acid. See Weiser, Inorganic Colloidal Chemistry, Vol. 2, p. 281 (1935). For purposes of this invention and in order to preclude the incorporation of contaminants in the sols, it is preferred to hydrolyze the alkyl orthoesters of the metals in an acid pH range of 1 to 3, in the presence of a water miscible solvent, wherein the colloid is present in the dispersion in an amount of 0.1 to 10 weight percent.

In some embodiments, the sol/gel forming components can be metal halides of the metals as mentioned above, which are reacted with oxygen functionalized carbon nanoparticles to form the desired sol/gel.

In case, the sol/gel forming compounds are oxygen-containing compounds, e.g. alkoxides, ethers, alcohols or acetates, these can be reacted with suitably functionalized carbon-based nanoparticles.

In case, the sol/gel is formed by a hydrolytic sol/gel-process, the molar ratio of the added water and the sol/gel forming component like alkoxides, oxides, acetates, nitrides or combinations thereof is preferably in the range of 0.001 to 100, preferably from 0.1 to 80, more preferred from 0.2 to 30.

In a typical hydrolytic sol/gel processing procedure suitable in the process of the invention, the sol/gel components are blended with the chemically modified carbon nanoparticles in the presence of water, optionally further solvents or mixtures thereof, and further additives are added, like surfactants, fillers and the like, as described in more detail hereinafter. Organic polymer is added to the mixture, optionally dissolved or as a suspension, emulsion or dispersion in a solvent like water, organic solvent or mixtures thereof Further additives like crosslinkers may be added, as well as catalysts for controlling the hydrolysis rate of the sol or for controlling the crosslinking rate. Such catalysts are also described in further detail hereinbelow. Such processing is similar to sol/gel processing principally known in the prior art.

Non-hydrolytic sol/gel processing is similarly made as described above, however essentially in the absence of water.

In case the sol/gel is formed by a non-hydrolytic sol/gel-process or by chemically linking the components with a linker, the molar ratio of the halide and the oxygen-containing compound is in the range of 0.001 to 100, preferred from 0.1 to 140, even more preferred from 0.1 to 100, particularly preferred from 0.2 to 80.

In nonhydrolytic sol/gel processes, the use of metal alkoxides and carboxylic acids or carboxylic acid functionalized carbon nanoparticles and their derivatives are also suitable according to the present invention. Suitable carboxylic acids are acetic acid, acetoacetic acid, formic acid, maleic acid, crotonic acid, succinic acid

Non-hydrolytic sol/gel processing in the absence of water may be accomplished by reacting alkylsilanes or metal alkoxides with anhydrous organic acids, acid anhydrides or acid esters, or the like. Acids and their derivatives are suitable as sol/gel components or for modifying/functionalizing carbon nanoparticles.

Therefore, in the process of the present invention, the at least one sol/gel forming component in nonhydrous sol/gel processing may be selected from anhydrous organic acids, acid anhydrides or acid esters like formic acid, acetic acid, acetoacetic acid, succinic acid maleic acid, crotonic acid, acrylic acid, methacrylic acid, partially or fully fluorinated carboxylic acids, their anhydrides and esters, e.g. methyl- or ethylesters, and any mixtures of the foregoing. In the case of acid anhydrides, it is often preferred to use these anhydrides in admixture with anhydrous alcohols, wherein the molar ratio of these components determines the amount of residual acetoxy groups at the silicon atom of the alkylsilane employed.

Typically, according to the degree of cross-linking desired in the resulting sol/gel, either acidic or basic catalysts are applied, particularly in hydrolytic sol/gel processes. Suitable inorganic acids are, for example, hydrochloric acid, sulfuric acid, phosphoric acid, nitric acid as well as diluted hydrofluoric acid. Suitable bases are, for example, sodium hydroxide, ammonia and carbonate as well as organic amines. Suitable catalysts in non-hydrolytic sol/gel processes are anhydrous halide compounds, for example BCl₃, NH₃, AlCl₃, TiCl₃ or mixtures thereof.

To affect the hydrolysis in hydrolytic sol/gel processing steps of the present invention, the addition of solvents may be used. Preferred are water-miscible solvents. It is preferred to use water-miscible alcohols herein or mixtures of water-miscible alcohols. Especially suitable are alcohols such as methanol, ethanol, n-propanol, isopropanol, n-butanol, isobutanol, t-butanol and lower molecular weight ether alcohols such as ethylene glycol monomethyl ether. Sometimes it is favourable to use small amounts of non-water-miscible solvents such as toluene.

### Additives

The properties of the inventive composite materials, e.g. resistance to mechanical stress, electrical conductivity, impact strength or optical properties, can be varied by application of suitable amounts of additives, particularly with the addition of organic polymer materials.

### Organic polymer material

In the embodiments of the present invention organic polymer materials are added to the sol/gel blend to further modify the resulting properties of the inventive composite materials, to induce porosity, to increase biocompatibility or to improve mechanical or electrical properties.

The organic polymer material suitable in the inventive process may be selected from homopolymers or copolymers of aliphatic or aromatic polyolefins such as polyethylene, polypropylene, polybutene, polyisobutene, polypentene; polybutadiene; polyvinyls such as polyvinyl chloride or polyvinyl alcohol, poly(meth)acrylic acid, polymethylmethacrylate (PMMA), polyacrylocyano acrylate; polyacrylonitril, polyamide, polyester, polyurethane, polystyrene, polytetrafluoroethylene; polymers such as collagen, albumin, gelatine, hyaluronic acid, starch, celluloses such as methylcellulose, hydroxypropyl cellulose, hydroxypropyl methylcellulose, carboxymethylcellulose phthalate; waxes, paraffin waxes, Fischer-Tropsch waxes; casein, dextrans, polysaccharides, fibrinogen, poly(D,L-lactides), poly(D,L-lactide coglycolides), polyglycolides, polyhydroxybutylates, polycarbonates, polyalkyl carbonates, polyorthoesters, polyesters, polyhydroxyvaleric acid, polydioxanones, polyethylene terephthalates, polymaleate acid, polytartronic acid, polyanhydrides, polyphosphazenes, polyamino acids; polyethylene vinyl acetate, silicones; poly(ester urethanes), poly(ether urethanes), poly(ester ureas), polyethers such as polyethylene oxide, polypropylene oxide, pluronics, polytetramethylene glycol; polyvinylpyrrolidone, poly(vinyl acetate phthalate), alkyd resin, chlorinated rubber, epoxy resin, formaldehyde resin, (meth)acrylate resin, phenol resin, alkyl phenol resin, amine resin, melamine resin, vinyl ester resin, Novolac® epoxy resin, as well as their copolymers, shellac, organic materials of renewable raw materials, mixtures and combinations of these homopolymers or copolymers. Further suitable organic materials are e.g. polyacetylenes, polyanilines, poly(ethylenedioxythiophenes), polydialkylfluorenes, polythiophenes, polyparaphenylenes, polyazines, polyfuranes, poly-p-phenylensilfides, polyselenophenes or polypyrroles, monomers, oligomers or polymers thereof, which may be used to increase the electrical conductivity of the inventive composites, even after the gels have been converted in an optional pyrolysis step.

Especially preferred in some embodiments is the use of polymer encapsulated fullerenes or other carbon-nanoparticles as defined above as the organic polymer material to be added to the sol/gel mixture. At least a part of the carbon nanoparticles can be encapsulated for this purpose into shells of almost any of the above-mentioned polymers by dispersion-, suspension- or emulsion polymerisation methods as known in the prior art. Preferred polymers for this purpose are PMMA, polystyrene and polyvinylacetate, especially preferred are electrically conductive polymers.

The organic polymer material is added to the sol/gel in an amount of 1 to 90 % by weight, preferably 5 to 60 weight % of the resulting composite material.

In some preferred embodiments further additives can be added to the sol/gel forming composition, which do not react with the components of the sol/gel.

Examples of suitable additives include fillers, pore-forming agents, metals and metal powders, etc. Examples of inorganic additives and fillers include silicon oxides and aluminum oxides, aluminosilicates, zeolites, zirconium oxides, titanium oxides, talc, graphite, carbon black, fullerenes, clay materials, phyllosilicates, silicides, nitrides, metal powders, in particular those of catalytically active transition metals such as copper, gold and silver, titanium, zirconium, hafnium, vanadium, niobium, tantalum, chromium, molybdenum, tungsten, manganese, rhenium, iron, cobalt, nickel, ruthenium, rhodium, palladium, osmium, iridium or platinum.

By means of such additives in the inventive composite materials, it is possible to further vary and adjust the mechanical, optical and thermal properties of the material, particularly suitable for producing tailormade coatings.

Further suitable additives are fillers, crosslinkers, plasticizers, lubricants, flame resistants, glass or glass fibres, carbon fibres, cotton, fabrics, metal powders, metal compounds, silicon, silicon oxides, zeolites, titan oxides, zirconium oxides, aluminum oxides, aluminum silicates, talcum, graphite, soot, phyllosilicates and the like. Fillers are particularly preferred.

In preferred embodiments the sol/gel network is further modified by the addition of at least one crosslinking agent to the mixture of sol/gel components, modified nanoparticles and optionally the organic polymer material, the crosslinking agent being selected from, for example, isocyanates, silanes, diols, di-carboxylic acids, (meth)acrylates, for example such as 2-hydroxyethyl methacrylate, propyltrimethoxysilane, 3-(trimethylsilyl)propyl methacrylate, isophoron diisocyanate, and the like. Particularly preferred are biocompatible crosslinkers like diethylentriaminoisocyanate and 1,6 diisocyanatohexan, especially in inventive processes, wherein the sol/gel is converted into the solid composite material at relatively low temperatures, e.g. below 100°C. Without wishing to be bound to any specific theory, it is believed that with the use of suitable crosslinkers in combination with the incorporation of carbon nanoparticles into the inventive composites, an anisotropic porosity, i.e. a gradient of the pore size through the composite material can be obtained, see examples 3 and 4. Such a provision of anisotropic porosity may be further influenced by fillers, as discussed above and below hereinafter.

Fillers can be used to modify the size and the degree of porosity. In some embodiments non-polymeric fillers are particularly preferred. Non-polymeric fillers can be any substance which can be removed or degraded, for example, by thermal treatment or other conditions, without adversely effecting the material properties. Some fillers might be resolved in a suitable solvent and can be removed in this manner from the material. Furthermore, non-polymeric fillers, which are converted into soluble substances under the chosen thermal conditions, can also be applied. In some embodiments these non-polymeric fillers are, for example, anionic, cationic or non-ionic surfactants, which can be removed or degraded under the thermal conditions according to the invention.

In another embodiment, the preferred fillers are inorganic metal salts, particularly salts from alkaline and/or alkaline earth metals, preferred alkaline or alkaline earth metal carbonates, -sulfates, -sulfites, -nitrates, -nitrites, -phosphates, -phosphites, - halides, -sulfides, -oxides, as well as mixtures thereof. Further suitable fillers are organic metal salts, e.g. alkaline or alkaline earth and/or transition metal salts, in particular its formiates, acetates, propionates, malates, maleates, oxalates, tartrates, citrates, benzoates, salicylates, phtalates, stearates, phenolates, sulfonates, and amines as well as mixtures thereof.

In still another embodiment polymeric fillers are applied. Suitable polymeric fillers are saturated, linear or branched aliphatic hydrocarbons, which can be homo- or copolymers. Polyolefins like polyethylene, polypropylene, polybutene, polyisobutene, polypentene as well as copolymers thereof and mixtures thereof are preferred. Furthermore, polymer particles formed of methacrylates or polystearine as well as conducting polymers like polyacetylenes, polyanilines, poly(ethylenedioxythiophenes), polydialkylfluorenes, polythiophenes or polypyrroles can also be applied as polymeric fillers.

The above-mentioned procedures, the use of soluble fillers in addition to polymeric fillers can be combined, which are volatile under thermal conditions according to the invention or can be converted into volatile compounds during the thermal treatment. In this way the pores formed by the polymeric fillers can be combined with the pores formed by the other fillers to achieve an anisotropic pore distribution.

Suitable particle sizes of the non-polymeric fillers can be determined by a person skilled in the art depending on the desired porosity and/or size of the pores of the resulting composite material.

Preferably, porosity in inventive composite materials is produced by treatment processes such as described in DE 103 35 131 and PCT/EP04/00077 whose disclosures are herewith incorporated by reference in full.

Further additives useful in the invention are e.g. drying-control chemical additives such as glycerol, DMF, DMSO or any other suitable high boiling point or viscous liquid for suitably controlling the conversion of the sols to gels and solid composites.

### Solvents

Suitable solvents, which can be used for the removal of the fillers, after thermal treatment of the material, are, for example, (hot) water, diluted or concentrated inorganic or organic acids, bases and the like. Suitable inorganic acids are, for example, hydrochloric acid, sulfuric acid, phosphoric acid, nitric acid as well as diluted hydrofluoric acid. Suitable bases are for example sodium hydroxide, ammonia, carbonate as well as organic amines. Suitable organic acids are, for example, formic acid, acetic acid, trichloromethane acid, trifluoromethane acid, citric acid, tartaric acid, oxalic acid and mixtures thereof.

In preferred embodiments, coatings of the inventive composite materials are applied as a liquid solution or dispersion or suspension in a suitable solvent or solvent mixture, with subsequent drying / evaporation of the solvent. Suitable solvents comprise, for example, methanol, ethanol, N-propanol, isopropanol, butoxydiglycol, butoxyethanol, butoxyisopropanol, butoxypropanol, n-butyl alcohol, t-butyl alcohol, butylene glycol, butyl octanol, diethylene glycol, dimethoxydiglycol, dimethyl ether, dipropylene glycol, ethoxydiglycol, ethoxyethanol, ethyl hexane diol, glycol, hexane diol, 1,2,6-hexane triol, hexyl alcohol, hexylene glycol, isobutoxy propanol, isopentyl diol, 3-methoxybutanol, methoxydiglycol, methoxyethanol, methylethylketone, methoxyisopropanol, methoxymethylbutanol, methoxy PEG-10, methylal, methyl hexyl ether, methyl propane diol, neopentyl glycol, PEG-4, PEG-6, PEG-7, PEG-8, PEG-9, PEG-6-methyl ether, pentylene glycol, PPG-7, PPG-2-buteth-3, PPG-2 butyl ether, PPG-3 butyl ether, PPG-2 methyl ether, PPG-3 methyl ether, PPG-2 propyl ether, propane diol, propylene glycol, propylene glycol butyl ether, propylene glycol propyl ether, tetrahydrofurane, trimethyl hexanol, phenol, benzene, toluene, xylene; as well as water, if necessary in mixture with dispersants, surfactants or other additives and mixtures of the above-named substances.

All of the above-mentioned solvents can also be used in the sol/gel process.

Preferred solvents comprise one or several organic solvents from the group of ethanol, isopropanol, *n*-propanol, dipropylene glycol methyl ether and butoxyisopropanol (1,2-propylene glycol-*n*-butyl ether), tetrahydrofurane, phenol, benzene, toluene, xylene, preferably ethanol, isopropanol, *n*-propanol and/or dipropylene glycol methyl ether, in particular isopropanol and/or *n*-propanol.

The fillers can be partly or completely removed from the material depending on the nature and time of treatment with the solvent. The complete removal of the filler is preferred.

### Conversion

The sol or gel formed by the process according to the invention is converted into a solid composite material.

Conversion of the sol into gel may be accomplished e.g. by ageing, curing, raising of pH, evaporation of solvent or any other methods known in the art.

The sol may be first converted into a gel and subsequently converted into the inventive solid composite material, or the sol may be directly converted into the composite material, particularly where the materials used result in polymeric glassy composites.

It is preferred that the conversion step is achieved by drying the sol or gel. In preferred embodiments this drying step is a thermal treatment of the sol or gel, which may optionally be a pyrolysis or carbonization step, in the range of -200°C to 3500 °C, preferably in the range of -100°C to 2500 °C, more preferably in the range of -50°C to 1500 °C, 0°C to 1000 °C, and most preferably 50 °C to 800 °C.

In some preferred embodiments, a thermal treatment is performed by laser applications, e.g. by selective laser sintering (SLS).

### Atmospheres

The conversion of the sol/gel into the solid material can be performed under various conditions. The conversion can be performed in different atmospheres e.g. inert atmosphere, like nitrogen, SF₆, or noble gases like argon, or any mixtures thereof or in an oxidizing atmosphere like oxygen, carbon monoxide, carbon dioxide, nitrogen oxide. Furthermore, it can be preferred to blend the inert atmosphere with reactive gases, e.g. hydrogen, ammoniak, C₁-C₆ saturated aliphatic hydrocarbons like methane, ethane, propane and butene, mixtures thereof or other oxidizing gases.

In some embodiments, it is preferred that the atmosphere and the process according to the invention during the thermal treatment is substantially free of oxygen. The oxygen content is preferably below 10 ppm, more preferred below 1 ppm.

In some other embodiments according to the invention, the material achieved from the thermal treatment can be further treated with oxidizing and/or reduction agents.

Particularly preferred is a treatment of the material at elevated temperatures in oxidizing atmospheres. Examples for oxidizing atmospheres are oxygen, carbon monoxide, carbon dioxide, nitrogen oxide or similar oxidizing agents. The oxidizing agent can also be mixed with inert atmospheres, like noble gases. Partial oxidation is preferred to be accomplished at elevated temperatures in the range of 50°C to 800 °C.

Besides partial oxidation of the material with gaseous oxidizing agents, liquid oxidizing agents can also be applied. Liquid oxidizing agents are, for example, concentrated nitric acid. It can be preferred to contact the concentrated nitric acid with the material at temperatures above room temperature.

Furthermore, in some embodiments, high pressure is applied to form the material according to the invention. One particularly preferred conversion step is drying under supercritical conditions, for example in supercritical carbon monoxide, leading to highly porous Aerogel composites. In other embodiments, reduced pressure or a vacuum is applied to convert the sol/gel into the material according to the invention.

A person skilled in the art will apply suitable conditions like temperature, atmosphere or pressure depending on the desired property of the final material according to the invention and the materials used to form the material of the invention.

The carbon nanoparticle can still be present in the material according to the invention without decomposition, depending on the conditions used. In some embodiments the chemical bond between the carbon-based nanoparticle and the sol/gel forming compounds can still be present.

By oxidative and/or reductive treatment or by the incorporation of additives, fillers or functional materials, the properties of the composites produced according to the invention can be influenced and/or modified in a controlled manner. For example, it is possible to render the surface properties of the composite hydrophilic or hydrophobic in nature by incorporating inorganic nanoparticles or nanocomposites such as layer silicates.

According to preferred embodiments of the process of the invention, it is also possible to suitably modify the composite material e.g. by varying the pore sizes by suitable oxidative or reductive after-treatment steps, such as oxidation in the air at elevated temperatures, boiling in oxidizing acids, alkalines or admixing volatile components which are degraded completely during the conversion step and leave pores behind in the carbon-containing layer.

Coatings or bulk materials made according to this invention may be structured in a suitable way before or after conversion into the inventive composite by folding, embossing, punching, pressing, extruding, gathering, injection molding and the like before or after being applied to the substrate or being molded or formed. In this way, certain structures of a regular or irregular type can be incorporated into the composite coating produced with the material according to this invention.

The sols or gels according to the invention can be further processed by techniques known in the art, e.g. to build molded paddings, shaped bodies and the like, or to form coatings on any substrates.

The moulded paddings can be produced in any forms. The molded paddings or shaped materials according to the invention can be in the form of pipes, bead-moldings, plates, blocks, cuboides, cubes, spheres or hollow spheres or any other three-dimensional structure, for example longish, circle-shaped, polyether-shaped, e.g. triangular shaped or bar-shaped or plate-shaped or tetraeder-shaped, pyramidal, octaeder-shaped, dodecaeder-shaped, ikosaeder-shaped, rhomboid, prism-shaped or spheric, like ball-shaped, spheroid or cylindrical lensoid, ring-shaped, honeycomb-shaped, etc.

By applying multi-layered half-finished molded shapes, asymmetric constructions can be realized by the inventive material. The material can be brought into the desired form by applying any known technique in the art, e.g. by casting processes like sand casting, shell molding, full mold processes, die casting, centrifugal casting or by pressing, sintering, injection molding, compression molding, blow molding, extrusion, calendaring, fusion welding, pressure welding, jiggering, slip casting, dry pressing, drying, firing, filament winding, pultrusion, lamination, autoclave, curing or braiding.

Coatings from sols/gels according to the invention can be applied in liquid, pulpy or pasty form, for example, by painting, furnishing, phase-inversion, dispersing atomizing or melt coating, extruding, slip casting, dipping or as a hotmelt. In case the sol or gel is in a solid state by powder coating, flame spraying, sintering or the like be applied on a suitable substrate. Dipping, spraying, spin coating, ink-jet-printing, tampon and microdrop coating or 3-D-printing are preferred. The coating according to the invention can be carried out in a way that a coating is applied to an inert substrate, dried and if necessary thermally treated, where the substrate is either thermally stable or thermally instable, yielding a substantially complete degradation of the substrate, such that the coating remains after the thermal treatment in the form of the inventive material.

In particular, gels can be processed by any technique known in the art. Preferred techniques are folding, stamping, punching, printing, extruding, die casting, injection molding, reaping and the like. Furthermore, preferred coatings can be obtained by a transfer process, in which the gels are applied to the substrates as a lamination. The coated substrates can be cured and afterwards the coating can be released from the substrate to be thermally treated. The coating of the substrate can be obtained by suitable printing procedures, e.g. thrust bearing printing, scraping, spraying techniques or thermal laminations or wet-in-wet laminations. It is possible to apply more than one thin layer to ensure an error-free composite film.

By applying the above-mentioned transfer procedure, it is also possible to form multi-layer gradient films from different layers of different sequences of layers, which, after conversion into the material according to the invention, lead to gradient materials, in which the density of the material varies form place to place.

In another preferred embodiment, the sol or gel according to the invention is dried or thermally treated and commuted by suitable techniques known in the art, for example by grinding in a ball mill or roller mill and the like. The commuted material can be used as a powder, flat blank, a rod, a sphere, hollow sphere in different grainings and can be processed by techniques known in the art to granulated or extrudates in various forms. Hot-pressure-procedures, if necessary accompanied by suitable binders, can be used to form the inventive material.

Additional possibilities of processing are the formation of powders by other techniques known in the art, for example by spray-pyrolyse, or precipitation or the formation of fibres by spinning-techniques, preferred by gel-spinning. Another possibility of processing is the drying under supercritical conditions to form aerogels.

Thermal treatment of the preferred embodiments according to the process of the invention leads to powders or dried gels for the formation of xerogels or aerogels or for curing of the material, yielding the desired properties like porosity or sintering degree.

Depending on the temperature chosen for the thermal treatment and the specific composition of the material, composite materials can be obtained, in particular ceramic- and composite half-finished materials, molded paddings and coatings are obtained, whose structures can be in the range from amorphous to crystalline.

In particularly preferred embodiments, a solvent-free gel can be used by application of temperatures below 0 °C. It can be preferred that no specific thermal treatment is performed, especially to further process the sols/gels according to the invention at room temperature to preserve properties of the material, for example for sensor or optical applications.

### Examples

### Example 1 Modification of the carbon-based nanoparticle

1 g of a fullerene mixture of C₆₀ and C₇₀ (Nanom-Mix, FCC, Japan) are mixed together with 99 g 3-aminopropyl-trimethoxysilane (Dynasylan® AMMO, available from Degussa AG, Germany) in a water bath at 50°C under continuous stirring (20 rpm) for 20 h to yield a red-brown liquid.

### Example 2:

2 g of the above-mentioned silane-modified fullerene liquid mixture was reacted with 0.5 TEOS (Dynasil® A, available from Degussa AG, Germany) and 0.5 g concentrated H₂SO₄ for approximately 4 h at room temperature, resulting in a homogeneous gel (20 rpm). Subsequently, 1.0 g of a phenoxy resin (Beckopox EP 401, UCB Solutia) and 22.5 g MEK (methylethylketone) were added to the gel, to yield a dispersion. After applying the dispersion onto glass and steel substrates, the samples were tempered at 300 °C for 30 minutes. The films were homogeneous, translucent and of yellowish color. The fullerene-containing samples exhibited a surface resistance of 10⁹ Ohms, while the polymer film did not reveal any anti-static or conducting resistance. The films were scratch-resistant and elastic, the 90° folding of the coated steel did not show any flakings or cracks within the films.

### Example 3:

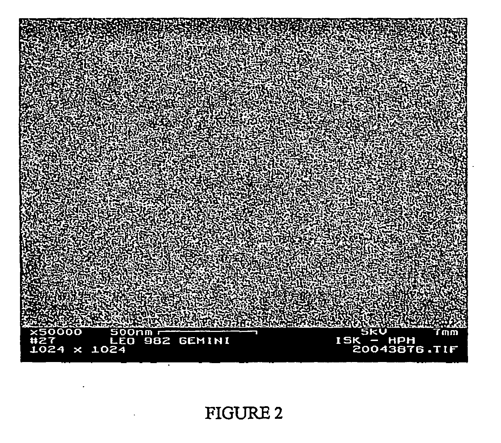

4 g of the above-mentioned fullerene mix (Nanom, FCC) are stirred (20 rpm) with 16 g 2-aminoethyl-3-aminopropyltrimethoxysilane (Dynasylan® DAMO, available from Degussa AG, Germany) at 50°C for 20 h. 4 g of the resulting liquid mixture containing modified fullerene and residual silane are gelled with 1 g concentrated HCl, 1g Tween® 20 (surfactant), 0.5 g water, and 1.0 g of a phenoxy resin (Beckopox EP 401, UCB Solutia). Thereafter, isophorondiisocyanat was slowly added. The resulting material was cured under ambient conditions at room temperature. The solid material was then carbonized oxidatively at 150 °C. SEM analysis revealed a porous structure with an average pore size of 1 nm (Figure 2) at the surface and cutting edge. The surface area amounts to 4000 m²/g, measured by helium absorption according to the BET method.

### Example 4:

4 g of an AMMO-modified fullerene liquid mixture prepared as described in Example 1 with a weight ratio of fullerene:AMMO. of 1:20 are stirred (20 rpm) with 16 g TEOS (Dynasil^{®} A, available from Degussa AG, Germany), 2 g Tween^{®} 20 (surfactant) and a prepared solution of 3 g water, 3 g ethanol and 3 g concentrated HCl for 6 h. To the resulting sol, 2 g Aerosil®R972 (Degussa AG) and 4 g P25 (titanium oxide nanoparticles, Degussa AG) were added and a homogeneous paste was obtained. With constant stirring 1g 1,6 diisocyanatohexane (Sigma Aldrich) was added as a gas-forming crosslinker. After 10 minutes, the mass was transferred into a cylindrical glass mold and dried at 30°C. The dried hardened cylindrical body formed in the mold was subsequently washed in ethanol and then dried at room temperature. The resulting body of composite material revealed a macroporous structure with average pore sizes in the range of 5-10 µm. SEM-pictures show additional micropores with average pore sizes in the range of 10-20 nm, located in the walls of the macropores.

### Example 5:

4 g of an AMMO-modified fullerene liquid mixture prepared as described in Example 1 with a weight ratio of fullerene:AMMO of 1:20 are stirred (20 rpm) with 16 g TEOS (Dynasil^{®} A, available from Degussa AG, Germany), 2 g Tween^{®} 20 (surfactant) and a prepared solution of 3 g water, 3 g ethanol and 3 g concentrated HCl for 6 h. To the resulting sol 2 g Aerosil®R972 (Degussa AG) and 6 g polyethylenglycol PEO 100000 were added. With constant stirring 1g 1,6 diisocyanatohexane (Sigma Aldrich) was added as a gas-forming crosslinker. After 10 minutes, the mass was transferred into a cylindrical glass mold and dried at 30°C. The dried, hardened, cylindrically-shaped body formed in the mold was subsequently washed with ethanol in an ultrasonic bath at 70°C for 6 hours and then dried at room temperature. The resulting body of composite material revealed a macroporous structure with average pore sizes in the range of 5-10 µm. SEM-pictures show additional micropores with average pore sizes in the range of 30-60 nm, located in the walls of the macropores.

The invention is further described by the following claims, provided for further illustrative purposes and not intended to indicate any restriction to the scope of the invention:

## Claims

1. A process for the manufacture of composite materials, the process comprising the following steps:
a) forming a sol/gel by reacting at least one sol/gel forming component with at least one carbon nanoparticle which was chemically modified by functionalization with suitable linker groups which are capable to react with the sol/gel forming component, wherein the carbon-based nano-particle within the sol/gel is covalently connected with said at least one sol/gel forming component
b) adding organic polymer material to the formed sol/gel,
c) converting the resulting mixture into a solid composite material.

2. The process according to claim 1, wherein the carbon nanoparticles are selected from the group consisting of fullerene molecules, in particular C₃₆ - C₆₀ -, C₇₀ -, C₇₆-, C₈₀-, C ₈₆-, C₁₁₂-fullerenes or any mixtures thereof; nano-tubes, in particular MWNT, SWNT, DWNT; random-oriented nano-tubes, as well as fullerene onions or metallo-fullerenes, carbon fibres, soot particles or graphite particles; as well as combinations thereof.

3. The process according to any one of claims 1 or 2, wherein the linker groups are selected from the group consisting of primary, secondary or tertiary amino groups, straight chain or branched, substituted or unsubstituted alkyl-, alkenyl-, alkynyl-, cycloalkyl-, cycloalkenyl-, cycloalkynyl-, aryl-, alkylaryl-, arylalkyl-, alkenylaryl-, arylalkenyl-, alkynylaryl-, arylalkynyl-groups; alkyl-metal alkoxides, halogen, aromatic or aliphatic alcohol groups, pyrrolidinegroups, phthalocyaninegroups, carboxyl, carboxylate, esters, ethers.

4. The process according to one of claims 1 to 3, wherein the nanoparticles are functionalized by reaction with one of 3-aminopropyltrimethoxysilane, 3-aminopropyltriethoxysilane, 6-amino-1-hexanol, 2-(2-aminoethoxy)ethanol, cyclohexylamine, butyric acid choleterylester (PCBCR), 1-(3-methoxycarbonyl)-propyl)-1-phenylester, or combinations thereof.

5. The process according to one of claims 1 to 4, wherein the nanoparticles have an average particle size before chemical modification of 0.5 nm to 500 nm, preferably 0.5 nm - 100 nm, more preferably from 0.7 nm to 50 nm.

6. The process according to any one of claims 1 to 5, wherein the at least one sol/gel forming component is selected from the group consisting of alkoxides, metal alkoxides, metal oxides, metal acetates, metal nitrates, metal halides, as well as combinations thereof.

7. The process according to claim 6, wherein the sol/gel forming component is selected from the group consisting of silicon alkoxides, oligomeric forms of silicon alkoxides; alkylalkoxysilanes; aryltrialkoxysilanes and phenyltributoxysilane; phenyl-tri-(3-glycidyloxy)-silane-oxide (TGPSO), aminoalkylsilanes; 3-glycidyloxypropyltrimethoxysilane, 3-glycidyloxypropyltriethoxy-silane, bisphenol-A-glycidylsilanes; (meth)acrylsilanes, phenylsilanes, oligomeric or polymeric silanes, epoxysilanes; fluoroalkylsilanes as well as any mixtures of the foregoing.

8. The process according to claim 6, wherein the sol/gel forming component is selected from metal halides and is reacted with oxygen-functionalized carbon nanoparticles selected from alkoxide-, ether-, ester-, alcohol- or acetate-functionalized carbon nanoparticles.

9. The process according to any one of claims 1 to 8, wherein the sol/gel comprises water and the molar ratio of said water and said sol/gel forming components is in the range of 0.001 and 100.

10. The process according to any one of claims 1 to 8, wherein the sol/gel is formed in the presence of an organic solvent and the solvent content of the sol/gel is from 0.1 % and 90%.

11. The process according to any one of the preceding claims, wherein the organic polymer material added to the formed sol/gel is selected from homo- or copolymers of aliphatic or aromatic polyolefins like polyethylene, polypropylene, polybutene, polyisobutene, polypentene; polybutadiene; polycarbonate; polynorbornylene, polyalkyne, polydimethylsiloxane, polyethyleneterephthalate, nylons, polyvinylics like polyvinylchloride or polyvinylalcohol; poly(meth)acrylic acid, polyacrylonitrile, polyamide, polyester, polyurethane, polystyrene, polytetrafluoroethylene, waxes, paraffin waxes, Fischer-Tropschwaxes; paracyclophane, alkyd resin, fluorinated rubber, epoxy resin, acrylic resin, phenolic resin, amine resin, tar, tar-like materials, tar pitch, bitumen, starch, cellulose, shellac, organic materials of renewable raw materials, mixtures, copolymers and combinations of any of the foregoing.

12. The process according to any one of the preceding claims, wherein the conversion of the mixture of sol/gel and organic polymer material into a solid composite material is obtained by drying.

13. The process according to claim 12, wherein the drying comprises a thermal treatment in the range of -200°C to 3500 °C, optionally under reduced pressure or vacuum.

14. The process according to any one of the previous claims, additionally comprising the addition of at least one crosslinking agent to the mixture of sol/gel and organic polymer material, the crosslinking agent being selected from the group consisting of isocyanates, silanes, (meth)acrylates, or mixtures of any of the foregoing

15. The process according to any one of the previous claims, additionally comprising the addition of at least one filler to the mixture of sol/gel and organic polymer material, the filler being selected from the group consisting of components which do not react with the other components of the sol/gel.

16. The process according to claim 15, wherein the fillers are polymer encapsulated carbon nanoparticles.

17. The process according to any one of claims 15 or 16, additionally comprising at least partially removing the filler from the resulting solid composite material.

18. The process according to any one of the previous claims, wherein the organic polymer material and/or the filler or other additives are added during the sol/gel formation step, after formation of the sol/gel, or partially during and after the formation of the sol/gel.

19. Composite material obtainable by a process according to any one of claims 1 to 18, comprising carbon nanoparticles and at least one organic polymer material incorporated in a sol/gel network, wherein the carbon nanoparticles are covalently connected with the sol/gel forming components. ,

20. Solid composite material according to claim 19, in the form of a coating.

## Patentansprüche

1. Verfahren zur Herstellung von Verbundmaterialien, wobei das Verfahren die folgenden Schritte umfasst:
a) Herstellen eines Sol/Gels durch Umsetzen mindestens einer Sol/Gel-bildenden Komponente mit mindestens einem Kohlenstoffnanopartikel welches chemisch modifiziert wurde durch Funktionalisierung mit geeigneten Linkergruppen, die in der Lage sind mit der Sol/Gel-bildenden Komponente zu reagieren, wobei das kohlenstoffbasierte Nanopartikel innerhalb des Sol/Gels mit der mindestens einen Sol/Gel-bildenden Komponente kovalent verknüpft ist,
b) Zusetzen von organischem Polymermaterial zu dem gebildeten Sol/Gel,
c) Umwandeln der resultierenden Mischung in ein festes Verbundmaterial.

2. Verfahren nach Anspruch 1, wobei die Kohlenstoffnanopartikel ausgewählt sind aus der Gruppe bestehend aus Fullerenmolekülen, insbesondere C₃₆-, C₆₀-, C₇₀-, C₇₆-, C₈₀-, C₈₆-, C₁₁₂-Fullerenen oder beliebigen Mischungen davon; Nanoröhrchen (Nanotubes), insbesondere MWNT, SWNT, DWNT; zufällig orientierte Nanotubes, sowie Fulleren Onions oder Metallo-Fullerene, Kohlenstofffasern, Russpartikel oder Graphitpartikel; sowie Kombinationen davon.

3. Verfahren nach einem der Ansprüche 1 oder 2, wobei die Linkergruppen ausgewählt sind aus der Gruppe bestehend aus primären, sekundären oder tertiären Aminogruppen, geradkettigen oder verzweigten substituierten oder unsubstituierten Alkyl-, Alkenyl-, Cykloalkyl-, Cykloalkenyl-, Cykloalkinyl-, Aryl-, Alkylaryl-, Arylalkyl-, Alkenylaryl-, Arylalkenyl-, Alkinylaryl-, Arylalkinylgruppen; Alkyl-Metallalkoxiden, Halogenen, aromatischen oder aliphatischen Alkoholgruppen, Pyrrolidingruppen, Phthalozyaningruppen, Carboxyl, Carboxylat, Ester oder Äther.

4. Verfahren nach einem der Ansprüche 1 bis 3, wobei die Nanopartikel funktionalisiert sind durch Umsetzen mit einem aus 3-Aminopropyltrimethoxysilan, 3-Aminopropyltriethoxysilan, 6-Amino-1-Hexanol, 2-(2-Aminoethoxy)ethanol, Cyklohexylamin, Buttersäurecholeterylester (PCBCR), 1-(3-Methoxycarbonyl)-propyl)-1-phenylester, oder Kombinationen davon.

5. Verfahren nach einem der Ansprüche 1 bis 4, wobei die Nanopartikel eine durchschnittliche Teilchengröße vor der chemischen Modifizierung von 0,5 nm bis 500 nm, vorzugsweise 0,5 nm bis 100 nm, besonders bevorzugt von 0,7 nm bis 50 nm, aufweisen.

6. Verfahren nach einem der Ansprüche 1 bis 5, wobei die mindestens eine Sol/Gel-bildende Komponente ausgewählt ist aus der Gruppe bestehend aus Alkoxiden, Metallalkoxiden, Metalloxiden, Metallacetaten, Metallnitraten, Metallhalogeniden, sowie Kombinationen davon.

7. Verfahren nach Anspruch 6, wobei die Sol/Gel-bildende Komponente ausgewählt ist aus der Gruppe bestehend Siliziumalkoxiden, oligomeren Formen von Siliziumalkoxiden, Alkylalkoxysilanen; Aryltrialkoxysilanen und Phenyltributoxysilanen; Phenyl-tri-(3-glycidyloxy)-Silanoxid (TGPSO), Aminoalkylsilanen; 3-Glycidyloxypropyltrimethoxysilan, 3-Glycidyloxypropyltriethoxysilan, Bisphenol-A-glyzidylsilanen; (Meth)acrylsilanen, Phenylsilanen, oligomere oder polymere Silane, Epoxysilane; Fluoralkylsilanen sowie beliebigen Mischungen der vorgenannten.

8. Verfahren nach Anspruch 6, wobei die Sol/Gel-bildende Komponente ausgewählt ist aus Metallhallogeniden und umgesetzt wird mit sauerstofffunktionalisierten Kohlenstoffnanopartikeln, ausgewählt aus Alkoxyd-, Ether-, Ester-, Alkohol- oder Azetatfunktionalisierten Kohlenstoffnanopartikeln.

9. Verfahren nach einem der Ansprüche 1 bis 8, wobei das Sol/Gel Wasser umfasst und das molare Verhältnis von Wasser und den Sol/Gel-bildenden Komponenten im Bereich von 0,001 und 100 liegt.

10. Verfahren nach einem der Ansprüche 1 bis 8, wobei das Sol/Gel in Gegenwart eines organischen Lösungsmittels gebildet wird und der Lösungsmittelgehalt des Sol/Gels von 0,1 Gewichts-% bis 90 Gewichts-% liegt.

11. Verfahren nach einem der vorhergehenden Ansprüche, wobei das zu dem gebildeten Sol/Gel zugesetzte organische Polymermaterial ausgewählt ist aus Homo- oder Copolymeren von aliphatischen oder aromatischen Polyolefinen wie Polyethylen, Polypropylen, Polybuten, Polyisobuten, Polypenten; Polybutadien; Polykarbonat; Polynorbonylen, Polyalkin, Polydimethylsiloxan, Polyethylenterephthalat, Polyamide, Polyvinyle wie Polyvinylchlorid oder Polyvinylalkohol; Poly(meth)acrylsäure, Polyacrylonitril, Polyamid, Polyester, Polyurethan, Polystyrol, Polytetrafluorethylen, Wachse, Paraffinwachse, Fischer-Tropschwachse; Parazyklophan, Alkydharz, fluorierter Kautschuk, Epoxyharz, Acrylharz, Phenolharz, Aminharz, Teer, teerhaltige Materialien, Teerpech, Bitumen, Stärke, Zellulose, Schellack, organische Materialien aus erneuerbaren Rohstoffen, Mischungen, Copolymere und Kombinationen beliebiger der vorgenannten.

12. Verfahren nach einem der vorhergehenden Ansprüche, wobei die Umwandlung der Mischung aus Sol/Gel und organischem Polymermaterial in ein festes Verbundmaterial durch Trocknen erzielt wird.

13. Verfahren nach Anspruch 12, wobei das Trocknen eine thermische Behandlung im Bereich von -200° C bis 3500° C umfasst, gegebenenfalls unter verringertem Druck oder Vakuum.

14. Verfahren nach einem der vorhergehenden Ansprüche, zusätzlich umfassend das Zusetzen mindestens eines Vernetzungsmittels zu der Mischung aus Sol/Gel und organischem Polymermaterial, wobei das Vernetzungsmittel ausgewählt ist aus der Gruppe bestehend aus Isocyanaten, Silanen, (Meth)acrylaten, oder Mischungen beliebiger der vorgenannten.

15. Verfahren nach einem der vorhergehenden Ansprüche, zusätzlich umfassend das Zusetzen mindestens eines Füllstoffs zur Mischung aus Sol/Gel und organischem Polymermaterial, wobei der Füllstoff ausgewählt ist aus der Gruppe der Bestandteile, die nicht mit den anderen Bestandteilen des Sol/Gels reagieren.

16. Verfahren nach Anspruch 15, wobei die Füllstoffe polymerverkapselte Kohlenstoffnanopartikel sind.

17. Verfahren nach einem der Ansprüche 15 oder 16, zusätzlich umfassend das zumindest teilweise Entfernen des Füllstoffs aus dem resultierenden festen Verbundmaterial.

18. Verfahren nach einem der vorhergehenden Ansprüche, wobei das organische Polymermaterial und/oder der Füllstoff oder andere Additive während des Sol/Gel-Bildungsschrittes zugesetzt werden, nach der Bildung des Sol/Gels, oder teilweise während und nach der Bildung des Sol/Gels.

19. Verbundmaterial erhältlich nach einem Verfahren gemäß einem der Ansprüche 1 bis 18, umfassend Kohlenstoffnanopartikel sowie mindestens ein organisches Polymermaterial, eingebaut in ein Sol/Gel-Netzwerk, wobei die Kohlenstoffnanopartikel mit den Sol/Gel-bildenden Komponenten kovalent verknüpft sind.

20. Festes Verbundmaterial nach Anspruch 19, in Form einer Beschichtung.

## Revendications

1. Processus de fabrication de matériaux composites, ce processus comprenant les étapes suivantes :
a) formation d'un sol/gel en faisant réagir au moins un composant de formation de sol/gel avec au moins une nanoparticule de carbone qui a été chimiquement modifiée par fonctionnalisation avec des groupes de liaison appropriés capables de réagir avec le composant de formation de sol/gel, la nanoparticule à base de carbone dans le sol/gel étant liée de manière covalente avec ledit au moins un composant de formation de sol/gel
b) ajout d'un matériau organique polymère au sol/gel formé
c) transformation du mélange résultant en un matériau composite solide.

2. Processus selon la revendication 1, dans lequel les nanoparticules de carbone sont sélectionnées dans le groupe constitué de molécules de fullerènes, plus particulièrement des fullerènes C36, C60, C70, C76, C80, C86, C112 ou tout mélange de ceux-ci ; de nanotubes, plus particulièrement MWNT, SWNT, DWNT ; des nanotubes à orientation aléatoire ainsi que des anions de fullerènes ou des métallofullérènes, des fibres de carbone, des particules de suie ou des particules de graphite ; ainsi que des combinaisons de ceux-ci.

3. Processus selon l'une des revendications 1 ou 2, dans lequel les groupes de liaison sont sélectionnés dans le groupe constitué de groupes aminos primaires, secondaires ou tertiaires, de groupes alkyles, alkényles, alkynyles, cycoalkyles, cycloalkényles, cycloalkynyles, aryles, alkylaryles, arylalkyles, alkénylaryles, arylalkényles, alkynylaryles, arylalkynyles à chaînes droites ou ramifiées, substitués ou non substitués ; de groupes alkoxydes alkyl-métalliques, halogènes, alcooliques aromatiques ou aliphatiques, pyrrolidines, phthalocyanines, carboxyles, carboxylates, esters, éthers.

4. Processus selon l'une des revendications 1 à 3, dans lequel les nanoparticules sont fonctionnalisées par une réaction avec le 3-aminopropyltriméthoxysilane, le 3-aminopropyltriéthoxysilane, le 6-amino-1-hexanol, le 2-(2-aminoéthoxy)éthanol, la cyclohexylamine, le cholétérylester d'acide butyrique (PCBCR), le 1-(3-méthoxycarbonyl)-propyl)-1-phénylester ou des combinaisons de ceux-ci.

5. Processus selon l'une des revendications 1 à 4, dans lequel les nanoparticules présentent une taille de particules moyenne avant modification chimique de 0,5 nm à 500 nm, de préférence de 0,5 nm à 100 nm, et de préférence de 0,7 nm à 50 nm.

6. Processus selon l'une des revendications 1 à 5, dans lequel le au moins un composant de formation de sol/gel est sélectionné dans le groupe constitué d'alkoxydes, d'alkoxydes métalliques, d'oxydes métalliques, d'acétates métalliques, de nitrates métalliques, d'halogénures métalliques ainsi que de combinaisons de ceux-ci.

7. Processus selon la revendication 6, dans lequel le composant de formation de sol/gel est sélectionné dans le groupe constitué d'alkoxydes de silicium, de formes oligomères d'alkoxydes de silicium ; d'alkylalkoxysilanes ; d'aryltrialkoxysilanes et du phényltributoxysilane ; du phényl-tri-(3-glycidyloxy)-silane-oxyde (TGPSO), d'aminoalkylsilanes ; du 3-glycidyloxypropyltriméthoxysilane, du 3-glycidyloxypropyltriéthoxysilane, de bisphénol-A-glycidylsilanes ; de (méth)acrylsilanes, de phénylsilanes, de silanes oligomères ou polymères, d'époxysilanes ; de fluoroalkylsilanes ainsi que de mélanges quelconques de ceux-ci.

8. Processus selon la revendication 6, dans lequel le composant de formation de sol/gel est sélectionné parmi des halogénures métalliques et est mis en réaction avec des nanoparticules de carbone fonctionnalisées avec de l'oxygène et sélectionnées parmi des nanoparticules de carbone fonctionnalisées avec un alkoxyde, un éther, un ester, un alcool ou un acétate.

9. Processus selon l'une des revendications 1 à 8, dans lequel le sol/gel contient de l'eau et le rapport molaire de ladite eau et desdits composants de formation du sol/gel est de l'ordre de 0,001 à 100.

10. Processus selon l'une des revendications 1 à 8, dans lequel le sol/gel est formé en présence d'un solvant organique et la teneur en solvant du sol/gel est de 0,1% à 90%.

11. Processus selon l'une des revendications précédentes, dans lequel le matériau polymère organique ajouté au sol/gel formé est sélectionné parmi des homopolymères ou copolymères de polyoléfines aliphatiques ou aromatiques comme le polyéthylène, le polypropylène, le polybutène, le polyisobutène, le polypentène ; le polybutadiène ; le polycarbonate ; le polynorbornylène, le polyalkyne, le polydiméthylsiloxane, le polyéthylènetéréphthalate, les nylons, des polyvinyliques comme le polyvinylchlorure ou l'alcool polyvinylique ; l'acide poly(méth)acrylique, le polyacrylonitrile, le polyamide, le polyester, le polyuréthane, le polystyrène, le polytétrafluoréthylène, les cires, les cires de paraffines, les cires de Fischer-Tropsch ; le paracyclophane, une résine alkyde, un caoutchouc fluoré, une résine époxy, une résine acrylique, une résine phénolique, une résine amine, le goudron, des matériaux similaires au goudron, du brai de goudron, du bitume; de l'amidon, de la cellulose, de la gomme laque, des matériaux organiques de matières premières renouvelables, des mélanges, copolymères et combinaisons de ceux-ci.

12. Processus selon l'une des revendications précédentes, dans lequel la transformation du mélange de sol/gel et de matériau polymère organique en un matériau composite solide est effectuée par séchage.

13. Processus selon la revendication 12, dans lequel le séchage comprend un traitement thermique de -200°C à 3500°C, optionnellement sous pression réduite ou sous vide.

14. Processus selon l'une des revendications précédentes, comprenant en outre l'ajout d'au moins un agent de réticulation au mélange de sol/gel et de matériau polymère organique, l'agent de réticulation étant sélectionné dans le groupe constitué d'isocyanates, de silanes, de (méth)acrylates ou de mélanges de ceux-ci.

15. Processus selon l'une des revendications précédentes, comprenant en outre l'ajout d'au moins une charge au mélange de sol/gel et de matériau polymère organique, la charge étant sélectionnée dans le groupe constitué de composants qui ne réagissent pas avec les autres composants du sol/gel.

16. Processus selon la revendication 15, dans lequel les charges sont des nanoparticules de carbone encapsulées dans un polymère.

17. Processus selon l'une des revendications 15 ou 16, comprenant en outre le retrait au moins partiel de la charge du matériau composite solide qui en résulte.

18. Processus selon l'une des revendications précédentes, dans lequel le matériau polymère organique et/ou la charge ou d'autres additifs sont ajoutés pendant l'étape de formation du sol/gel, après la formation du sol/gel ou bien partiellement pendant et partiellement après la formation du sol/gel.

19. Matériau composite pouvant être obtenu à l'aide d'un processus selon l'une des revendications 1 à 18, contenant des nanoparticules de carbone et au moins un matériau polymère organique incorporé dans un réseau de sol/gel, dans lequel les nanoparticules de carbone sont liées de manière covalente aux composants de formation du sol/gel.

20. Matériau composite solide selon la revendication 19, se présentant sous la forme d'un revêtement.
